# EUROPÄISCHE PATENTANMELDUNG

(11) **EP 2 886 613 A1**
(43) Veröffentlichungstag der Anmeldung: **24.06.2015**
(21) Anmeldenummer: 13005850.6
(22) Anmeldetag: 17.12.2013
(51) Int. Cl.: C09C 1/36, C09C 1/00, C09C 1/02

(54) **Verfahren zur Herstellung von Kompositpartikeln**

(71) Anmelder: KRONOS INTERNATIONAL, INC., 51373 Leverkusen (DE)
(72) Erfinder: Wilkenhöner, Uwe, 42107 Wuppertal (DE); Bender, Jürgen, 40789 Monheim (DE); Grosser, Ingo, 50823 Köln (DE)

(57) **Zusammenfassung**

Die Erfindung betrifft ein Verfahren zur Herstellung von Kompositpartikeln, insbesondere von Komositpartikeln auf Basis von Titandioxid und Carbonat mit Hilfe kombinierter Mischung, Homogenisierung und Fällung in einem auf dem Rotor-Stator-Prinzip basierenden Durchflussmischer.

Das Verfahren geht von einer wässrigen Suspension einer partikelförmigen Grundkomponente aus (z.B. Titandioxid), die bevorzugt in einem mit einem Hochleistungsrührwerk ausgestatteten Vorlagegefäß erzeugt wird. Wenigstens eine der benötigten Vorläufersubstanzen und/oder eine pH-steuernde Komponente zur Fällung von beispielsweise Calciumcarbonat wird in den Durchflussmischer dosiert und das Calciumcarbonat gefällt.

Das Verfahren kann als vollkontinuierliches oder als Batchverfahren geführt werden und ermöglicht kürzere Produktionszeiten. Die erzeugten Kompositpartikel weisen eine homogene Dispergierung der gefällten Partikel und der partikelförmigen Grundkomponente auf.

## Beschreibung

### Gebiet der Erfindung

Die Erfindung betrifft ein Verfahren zur Herstellung von Kompositpartikeln, insbesondere von Komositpartikeln auf Basis von Titandioxid und Carbonat mit Hilfe kombinierter Mischung, Homogenisierung und Fällung in einem auf dem Rotor-Stator-Prinzip basierenden Durchflussmischer.

### Technologischer Hintergrund der Erfindung

In Papierwaren, Kunststoffen, Farben, Lacken, Klebstoffen, Gummi etc. werden üblicherweise feinteilige anorganische oder organische Füllstoffe eingesetzt, die entweder als Streckungsmittel dienen und/oder die technischen Eigenschaften des Matrixmaterials verbessern. Dabei werden vielfach verschiedene Füllstoffe gleichzeitig eingesetzt. Die Füllstoffe liegen dann in der Matrix entweder in einfacher Mischung vor oder in Form von Kompositpartikeln, die jeweils aus mindestens zwei verschiedenen Füllstoffpartikeln zusammengesetzt sind. Kompositpartikel ermöglichen eine verbesserte Dispergierung der Füllstoffkomponenten in der Matrix und gegebenenfalls weitere Vorteile.

Beispielsweise werden anorganische Pigmente und insbesondere Titandioxidpigment oft in verschiedene Matrices als Weißmacher, Tönungsmittel oder Trübungsmittel eingearbeitet. Titandioxid streut aufgrund seiner hohen Brechkraft Licht besonders effizient und ist deswegen das wichtigste Weißpigment in den Anwendungsbereichen Farben und Lacke, Kunststoffe, Papier und Fasern. Die Lichtstreueffizienz sinkt, wenn die Titandioxidpartikel in einem geringeren Abstand als etwa der halben Wellenlänge des Lichts, also etwa 0,20 bis 0,25 µm voneinander entfernt in der Matrix verteilt sind. Die Lichtstreueffizienz wird typischerweise mit Hilfe des Deckvermögens bzw. des Aufhellvermögens (tinting strength) des Titandioxidpigments in der Matrix gemessen.

Titandioxid ist auf der anderen Seite ein signifikanter Kostenfaktor, und es wird seit längerem nach Möglichkeiten gesucht, um die Einsatzmenge an Titandioxid zu verringern, ohne signifikante Einbußen im Deckvermögen hinnehmen zu müssen.

Eine Einsparung ist möglich durch die Kombination von Titandioxidpartikeln mit geeigneten Füllstoffen, die als sogenannte "Extender-Partikel" als Abstandshalter für die TiO₂-Partikel wirken sollen. Die bekannten Herstellungsverfahren umfassen sowohl die einfache Mischung der Komponenten als auch die Herstellung von Kompositpartikeln durch Verbindung der TiO₂-Partikel mit den Extender-Partikeln mittels eines ausgefällten Bindemittels oder die in situ-Ausfällung des Extenders auf der Oberfläche der Titandioxidpartikel.

Als in situ ausgefällter Extender wird häufig Calciumcarbonat verwendet. Die in situ-Fällung erfolgt üblicherweise durch Reaktion von Calciumoxid oder Calciumhydroxid mit Kohlendioxid. Dabei wird eine wässrige Suspension von TiO₂-Partikeln oder anderen mineralischen Partikeln mit CaO oder Ca(OH)₂ gemischt und anschließend wird CO₂-Gas eingeleitet, so dass partikelförmiges Calciumcarbonat ausfällt (US 5,082,887 A, WO 2000/078874 A1, EP 1 255 791 B1, EP 0 983 322 B1, EP 1 323 674 A1, EP 1 644 580 B1). Die Mischung der Komponenten und die Fällung des Extenders findet chargenweise in einem Gefäß statt.
US 3,528 838 offenbart ein Verfahren, bei dem die Fällung durch Reaktion zweier gelöster Reaktanden in der TiO₂-Suspension stattfindet. Hier wird TiO₂ in einer Natriumcarbonatlösung dispergiert und anschließend eine Calciumchloridlösung hinzugegeben, so dass Calciumcarbonat ausfällt. Auch dieses Verfahren läuft als Batchverfahren in einem Gefäß ab.
US 5,993,533 A ebenso wie WO 2009/146834 A1 offenbaren ein Verfahren zur Beschichtung von Titandioxid durch Auffällung anorganischer Oxide wie SiO₂ und Al₂O₃, bei dem eine TiO₂-Suspension mit den Oxidvorläufersubstanzen in einem Inline-Mischer gemischt und die Mischsuspension anschließend in ein Gefäß gefördert wird, wo die Fällung stattfindet.

### Aufgabenstellung und Kurzbeschreibung der Erfindung

Der Erfindung liegt die Aufgabe zugrunde, ein alternatives Herstellverfahren für Kompositpartikel anzugeben, welche mindestens eine partikelförmige Trägerkomponente (Grundkomponente) und mindestens eine in situ gefällte anorganische Partikelkomponente enthalten.

Die Aufgabe wird gelöst durch ein Verfahren zur Herstellung von Kompositpartikeln enthaltend mindestens eine partikelförmige Grundkomponente und in situ gefällte anorganische Partikel aus einer wässrigen Suspension der partikelförmigen Grundkomponente, wobei die Suspension durch einen auf dem Rotor-Stator-Prinzip basierenden Durchflussmischer gefördert wird, dadurch gekennzeichnet, dass mindestens eine gelöste oder dispergierte Vorläuferverbindung und/oder eine pH-steuernde Komponente zur Erzeugung der in situ gefällten anorganischen Partikel in den Durchflussmischer dosiert und die anorganischen Partikel überwiegend im Durchflussmischer gefällt werden.

Weitere vorteilhafte Ausformungen der Erfindung sind in den Unteransprüchen angegeben.

### Figuren

Figur 1a: Schematisches Fließbild des erfindungsgemäßen Verfahrens als vollkontinuierliches Verfahren ohne Vorlagegefäß
Figur 1b: Schematisches Fließbild des erfindungsgemäßen Verfahrens als vollkontinuierliches Verfahren mit Vorlagegefäß
Figur 2a: Schematisches Fließbild des erfindungsgemäßen Verfahrens als Batchverfahren ohne Vorlagegefäß
Figur 2b: Schematisches Fließbild des erfindungsgemäßen Verfahrens als Batchverfahren mit Vorlagegefäß
Figur 3: Partikelgrößenverteilung der Kompositpartikel gemäß Beispiel 1
Figur 4: Partikelgrößenverteilung der Kompositpartikel gemäß Vergleichsbeispiel 1

### Beschreibung der Erfindung

Alle im Folgenden offenbarten Angaben bezüglich Größe in µm usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.

Das erfindungsgemäße Verfahren zeichnet sich dadurch aus, dass - ausgehend von einer wässrigen Partikelsuspension - die Dosierung mindestens einer weiteren flüssigen oder festen Komponente, die Mischung und Homogenisierung und die Reaktion und Fällung der anorganischen Partikel in einem auf dem Rotor-Stator-Prinzip basierenden Durchflussmischer (z.B. Inline-Dispergierer) stattfindet. Die schnelle und spontane Fällung der anorganischen Partikel unter gleichzeitigem Energieeintrag führt zur Bildung von Aggregaten (Kompositpartikeln) aufgebaut aus kleinen Kristallen der gefällten Komponente und Partikeln der Grundkomponente.

Im Gegensatz zu den bekannten Verfahren aus dem Stand der Technik wird keine gasförmige Reaktionskomponente eingesetzt.
Die Verwendung des auf dem Rotor-Stator-Prinzip basierenden Durchflussmischers führt einerseits zu einer optimalen Benetzung und Homogenisierung der Komponenten in der Suspension sowie zu einer homogenen Dispergierung der gefällten anorganischen Partikel und der partikelförmigen Grundkomponente in dem Kompositpartikel. Darüber hinaus führt das erfindungsgemäße Verfahren zu deutlich kürzeren Produktionszeiten.
Das erfindungsgemäße Verfahren kann darüber hinaus viskositätsunabhängig geführt werden. Bekanntermaßen ändert sich die Viskosität der Suspension während der Fällungsreaktion bei der spontanen Keimbildung in der Gelphase signifikant. Die Verwendung des auf dem Rotor-Stator-Prinzip basierenden Durchflussmischers ermöglicht Homogenisierung und Förderung auch bei erhöhten Viskositäten von bis zu 100.000 mPa.s.

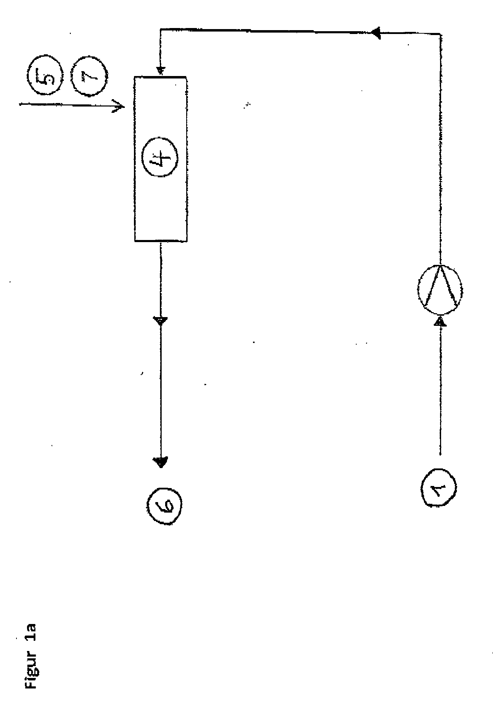

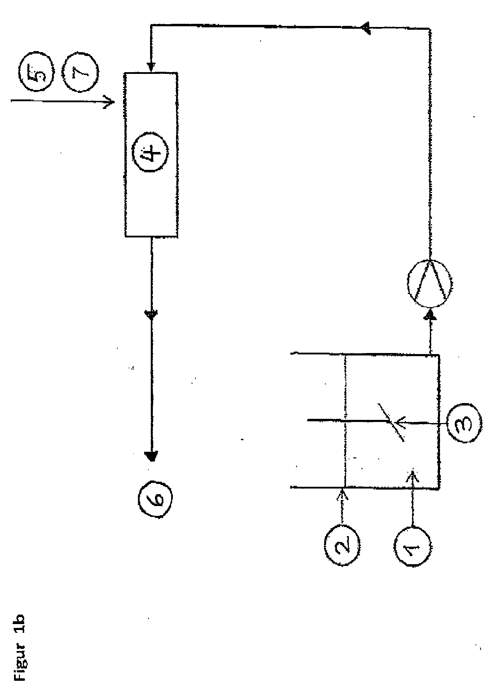

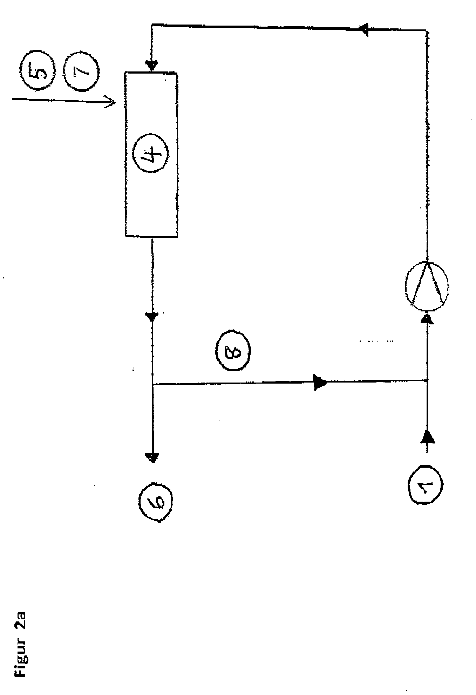

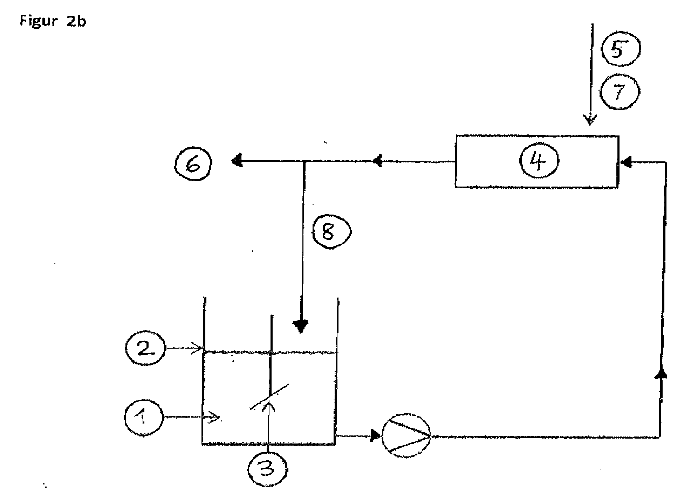

Das erfindungsgemäße Verfahren wird in den Figuren 1a, 1b, 2a und 2b schematisch dargestellt. Das erfindungsgemäße Verfahren geht von einer wässrigen Suspension (1) der mindestens einen partikelförmigen Grundkomponente aus. Als partikelförmige Grundkomponente (Trägerpartikel) kommen z.B. anorganische Pigmente wie Titandioxid, Eisenoxid usw. oder kommerziell bekannte anorganische Füllstoffe wie Carbonate, Kaolin, Talk, Glimmer usw. oder organische Füllstoffe in Frage. Die Suspension kann auch mehrere partikelförmige Grundkomponenten enthalten. Die Suspension kann auch mindestens eine der benötigten Vorläufersubstanzen für die zu fällenden anorganischen Partikeln enthalten. Vorzugsweise wird die Suspension in einem Vorlagegefäß (2) erzeugt, das mit einem Hochleistungsrührwerk (3), beispielsweise einem Leitstrahlmischer ausgerüstet ist. Das Hochleistungsrührwerk weist eine Umfangsgeschwindigkeit von mindestens 15 m/s oder eine spezifische Rührleistung von mindestens 30 W/m³ auf.

Die wässrige Suspension wird anschließend durch einen auf dem Rotor-Stator-Prinzip basierenden Durchflussmischer (4) - beispielsweise Inline-Dispergierer- gefördert. In den Mischkopf des Durchflussmischers wird mindestens eine der benötigten Vorläuferverbindungen (5) und/oder eine pH-steuernde Komponente (7) für die zu fällenden Partikel dosiert, optimal eingemischt und homogenisiert, wobei die anorganischen Partikel gefällt und Kompositpartikel gebildet werden.

Die anorganischen Partikel werden überwiegend in dem Durchflussmischer gefällt, d.h. zu mehr als 50 Gew.-%, bevorzugt zu mehr als 80 Gew.-%.

In einer Ausführung der Erfindung wird die Suspension mit den Kompositpartikeln anschließend ausgeschleust (6) und die Kompositpartikel abgetrennt. In diesem Fall wird das erfindungsgemäße Herstellverfahren als vollkontinuierliches Verfahren geführt (Figuren 1a, 1b).

In einer anderen Ausführung der Erfindung wird die Suspension im Kreislauf (8) durch den Durchflussmischer (4) und gegebenenfalls durch das Vorlagegefäß (2) geführt. In diesem Fall wird das erfindungsgemäße Verfahren als teilkontinuierliches Verfahren (Fig. 2a) oder als Batchverfahren geführt (Figur 2b).

Als zu fällende anorganische Partikel kommen beispielsweise Carbonate, Phosphate, Sulfate, Hydroxide, Silikate in Frage. Besonders geeignet sind Erdalkalicarbonate, - phosphate und -sulfate, insbesondere Calciumcarbonat und Calciumphosphat. Weiterhin geeignet sind Aluminiumhydroxid (z.B. ATH) und Aluminiumphosphat.

In einer besonderen Ausführung des Verfahrens werden Kompositpartikel hergestellt, wie sie in DE 10 2013 009 635.9 offenbart sind. Diese Kompositpartikel enthalten als partikelförmige Grundkomponente Titandioxidpartikel und mindestens einen anorganischen und/oder organischen Füllstoff sowie in situ gefällte Calciumcarbonat-Partikel.
Die Kompositpartikel gemäß DE 10 2013 009 635.9 zeichnen sich dadurch aus, dass die Titandioxidpartikel auf der Oberfläche von anorganischen oder organischen Füllstoffpartikeln (Extender) homogen verteilt sind und mittels in situ gefälltem Calciumcarbonat ein starker Verbund zwischen Extenderpartikel und Titandioxidpigmentpartikel hergestellt wird, der in der weiteren üblichen Verarbeitung beim Anwender wie z.B. Dispergierung in einem Dissolver oder in einem Inline-Dispergierer nur schwer getrennt werden kann.

Unter Titandioxidpartikel oder Titandioxidpigmentpartikel werden im Rahmen der Erfindung Partikel im Größenbereich von etwa 100 nm bis etwa 1 µm verstanden. Grundsätzlich können oberflächenbehandelte oder unbehandelte Titandioxidpigmentpartikel verwendet werden. Bevorzugt werden unbehandelte Titandioxidgrundkörper-Partikel verwendet, insbesondere Titandioxidgrundkörper-Partikel aus dem Chloridprozess. Die Titandioxidpigmentpartikel können dotiert sein, vorzugsweise mit Aluminium. Wirtschaftlich besonders vorteilhaft ist es, nach dem Chloridprozess hergestellte, nicht-sandgemahlene und nicht-entchlorte Titandioxidgrundkörper-Partikel einzusetzen. Alternativ ist es auch möglich, sandgemahlene und entchlorte Titandioxidgrundkörper-Partikel aus dem Chloridprozess oder sandgemahlenen Titandioxidgrundkörper-Partikel aus dem Sulfatprozess einzusetzen.

Als Füllstoff kommen im Prinzip alle dem Fachmann bekannten kommerziellen anorganischen oder organischen Füllstoffe, auch als Mischungen in Frage. Als anorganische Füllstoffe sind beispielsweise geeignet: natürliche oder gefällte Calcium- oder Calcium-Magnesium- oder Magnesium-Carbonate wie Marmormehl, Kreide, gefälltes Calciumcarbonat (PCC), Dolomit, Huntit, Hydromagnesit oder Magnesit. Unter "Carbonate" fallen in diesem Zusammenhang auch Carbonate mit Hydroxidgruppen und/oder Kristallwasser. Weiterhin geeignet sind Sulfate wie Bariumsulfat und Calciumsulfat, natürliche Phosphate, Hydroxide wie Magnesiumhydroxid, Aluminiumhydroxid oder - oxidhydrat und Oxide wie beispielsweise Siliciumdioxid in natürlicher, gemahlener, pyrogener oder gefällter Form wie Quarzmehl, Kieselgur, usw. Weiterhin geeignet sind beispielsweise Silikate und Alumosilikate wie Talkum, Zeolithe, Kaolin, Wollastonit, Glimmer, ungebrannte und gebrannte Tonminerale. Ebenfalls geeignet sind beispielsweise Perlite und Glasmehl. Weiterhin können anorganische oder organische Fasern als Füllstoff verwendet werden. Bevorzugt werden weiße Füllstoffe eingesetzt. Besonders bevorzugt sind Ca-Mg- oder Mg-Carbonate wie Dolomit, Huntit, Hydromagnesit oder Magnesit.
Die Füllstoffpartikel weisen in der Regel eine Partikelgröße von 0,1 µm bis 100 µm auf, bevorzugt 0,5 µm bis 20 µm und insbesondere 1 µm bis 10 µm.

Die Calciumcarbonatpartikel werden infolge einer Reaktion zwischen den Vorläuferverbindungen "Calciumquelle" und "Carbonatquelle" gefällt.
Als Calciumquelle können beispielsweise Calciumverbindungen wie Calciumchlorid, Calciumnitrat oder Calciumhydroxid eingesetzt werden. Desweiteren kann Calciumcarbonat in Form einer dem Fachmann bekannten kommerziell üblichen Calciumcarbonatvariante als Calciumquelle eingesetzt werden. Vorteilhafterweise verfügt das eingesetzte Calciumcarbonat über einen hohen Weißgrad und eine Partikelgröße von maximal etwa 100 µm, bevorzugt 1 µm bis 40 µm und insbesondere 1 µm bis 20 µm. Bevorzugt wird natürliches Calciumcarbonat in Form von Kreide oder Marmormehl verwendet.
Als Carbonatquelle kann beispielsweise basisches Carbonat, beispielsweise Natriumcarbonat eingesetzt werden.

Die Herstellung von Kompositpartikeln auf Basis von Titandioxid und Calciumcarbonat mit Hilfe des erfindungsgemäßen Verfahrens kann in verschiedenen Varianten erfolgen.
In einer Ausführungsform wird von einer wässrigen Suspension von TiO₂-Partikeln und einer Carbonatquelle, beispielsweise Natriumcarbonat ausgegangen, vorzugsweise mit einem pH-Wert von >8. In den Durchflussmischer wird als zweite Vorläuferverbindung eine Calciumquelle, beispielsweise Calciumchlorid und gegebenenfalls eine pH-steuernde

Komponente dosiert, so dass der pH-Wert bei >8 liegt und Calciumcarbonat ausfällt.
In einer alternativen Ausführungsform wird von einer wässrigen Suspension von TiO₂-Partikeln und einer Calciumquelle wie beispielsweise Calciumchlorid ausgegangen, ebenfalls vorzugsweise mit einem pH-Wert von >8. In den Durchflussmischer wird als zweite Vorläuferverbindung eine Carbonatquelle, beispielsweise Natriumcarbonat und gegebenenfalls eine pH-steuernde Komponente dosiert, so dass der pH-Wert bei >8 liegt und Calciumcarbonat ausfällt.
Erfindungsgemäß kann auch von einer sauren Suspension ausgegangen werden. In diesem Fall müssen die Apparaturen (Rohrleitungen, Mischer etc.) säurebeständig ausgerüstet sein. Beispielsweise wird von einer wässrigen Suspension von TiO₂-Partikeln und einer Calciumquelle wie beispielsweise Calciumcarbonat sowie einer pH-steuernden Komponente ausgegangen, wobei der pH-Wert bei <5 liegt. In den Durchflussmischer wird eine Carbonatquelle wie beispielsweise Natriumcarbonat und gegebenenfalls eine pH-steuernde Komponente dosiert, so dass der pH-Wert bei >8 liegt und Calciumcarbonat ausfällt. Anstelle von Calciumcarbonat als Calciumquelle kann z.B. Calciumchlorid eingesetzt werden.

Geeignete pH-steuernde Komponenten sind dem Fachmann bekannt, beispielsweise Laugen oder Säuren. Als sauer reagierende Komponente sind beispielsweise anorganische Säuren wie Salzsäure oder Salpetersäure einsetzbar. Es sind desweiteren sauer reagierende Salze, deren Kationen das Gefüge und die spätere Verwendung der Kompositpigmentpartikel in den Anwendersystemen nicht stören, geeignet. Besonders vorteilhaft ist der Einsatz von sauer reagierenden Verbindungen, die im Rahmen der Titandioxidherstellung anfallen wie Titanylchlorid (Titanoxychlorid) sowie Salzsäure oder unterchlorige Säure, die prozessbedingt im Chloridverfahren anfallen. Die Säuren entstehen im Chloridverfahren z.B. durch Lösen des Chlorgases bei der Überführung des Pigments in die wässrige Phase.

Im Prinzip funktioniert das erfindungsgemäße Verfahren bei allen möglichen Mengenverhältnissen der verschiedenen Komponenten. Beispielsweise können Kompositpartikel mit den Mengenanteilen 10 bis 90 Gew.% Titandioxid und/oder Füllstoff als partikelförmige Grundkomponente und 90 bis 10 Gew.-% in situ gefällte Partikel hergestellt werden.

Die Temperatur während Dispergierung und Fällung kann gesteuert werden, indem sowohl das Vorlagegefäß wie die Förderleitung doppelwandig ausgerüstet und entsprechend aufgeheizt oder gekühlt werden. Auf diese Weise kann die Temperatur der Suspension auf Werte zwischen etwa 0°C und etwa 100 °C eingestellt werden.

Beispielsweise hat es sich als vorteilhaft herausgestellt, die Dispergierung und Homogenisierung der Titandioxid-Suspension bei etwa 30°C bis 40°C und die Fällung der Calciumcarbonatpartikel bei erhöhter Temperatur, etwa bei 50°C bis 60°C vorzunehmen,

In einer weiteren Ausführung des Verfahrens werden als in situ gefällte Partikel Calciumphosphatpartikel gefällt. Als Calciumquelle können beispielsweise Calciumcarbonat, Calciumphosphat, Calciumchlorid, Calciumnitrat oder gebrannter oder gelöschter Kalk verwendet werden. Als Phosphorquelle können beispielsweise Phosphorsäure, Phosphate, Hydrogenphosphat oder Polyphosphate eingesetzt werden.

In einer weiteren Ausführung des erfindungsgemäßen Verfahrens können weitere anorganische oder organische Verbindungen auf die Kompositpartikel gefällt werden, beispielsweise Phosphat, Siliciumdioxid, Aluminiumoxid, Fluorid etc. sowie beispielsweise Oxalat. Die entsprechenden Vorläuferverbindungen wie beispielsweise Phosphorsäure zur Fällung von Phosphat, Natriumsilikat zur Fällung von Siliciumdioxid, Natriumaluminat zur Fällung von Aluminiumoxid, Natriumfluorid zur Fällung von Fluorid, Oxalsäure zur Fällung von Oxalat werden in den Durchflussmischer zusammen mit gegebenenfalls erforderlichen pH-steuernden Komponenten dosiert. Dem Fachmann sind die entsprechenden Fällungsbedingungen bekannt.

In einer weiteren Ausführung der Erfindung können die Kompositpartikel abschließend mit organischen Additiven behandelt werden, vorzugsweise in einer Menge von 0,05 bis 30 Gew.% insbesondere 0,1 bis 5 Gew.% bezogen auf Gesamt-Feststoff. Die organischen Additive können sowohl in fester als auch in flüssiger Form eingesetzt werden. Geeignet als organische Additive sind zum einen handelsübliche wachsartige Additive mit und ohne weitere chemische Funktionalisierung. Zum anderen sind bekannte Dispergieradditive oder andere in der Lacktechnologie übliche Hilfsstoffe beispielsweise für Rheologie, Entschäumung, Benetzung etc. geeignet.

Die erfindungsgemäß hergestellten Kompositpartikel sind insbesondere geeignet für die Verwendung in Beschichtungen wie z.B. Innen- und Außendispersionsfarben sowie weiteren wasserbasierten oder lösemittelhaltigen Lacksystemen. Sie können weiterhin eingesetzt werden in Kunststoffen und Laminaten.

### Beispiele

Die Erfindung wird anhand der folgenden Beispiele genauer beschrieben, ohne dass dadurch der Umfang der Erfindung eingeschränkt werden soll.

### Beispiel 1

Zur Herstellung der erfindungsgemäßen Kompositpartikel gemäß Beispiel 1 wurden folgende Komponenten eingesetzt:

| | |
|---|---|
| Pigment: | sandgemahlener, entchlorter Titandioxidgrundkörper aus dem Chloridprozess als Suspension |
| Extender : | Ultracarb 1250 von Minelco (Huntit-Hydromagnesit-Gemisch) |
| Calciumquelle: | Calciumchloridlösung |
| Carbonatquelle: | Natriumcarbonat (Soda, fest) |
| Additiv: | Calgon N (Natrium-Hexametaphosphat) |

Die Kompositpartikel wurden folgendermaßen hergestellt:
75 g einer wässrigen Suspension von sandgemahlenen, entchlorten Titandioxidgrundkörper-Partikeln mit einer Feststoffkonzentration von 400 g/L TiO₂(1) wurden in einem Gefäß (2) mit Hochleistungsrührwerk (3) vorgelegt. Unter Rühren wurden anschließend 95 g Soda sowie 382 g Wasser hinzugegeben. Die Suspension wurde 30 min weiter gerührt, wobei sich die Soda löste und sich ein pH-Wert von >11 einstellte. Anschließend erfolgte die Zugabe des Additivs (0,5 Gew.% bezogen auf Gesamt-Feststoff inklusive aller Füllstoffe). Zu dieser Suspension wurden unter intensiver Rührung mit dem Hochleistungsrührwerk 135 g Ultracarb 1250 (Huntit-Hydromagnesit-Gemisch) gegeben und anschließend für ca. 30 min dispergiert. Anschließend wurde die Suspension durch den Durchflussmischer (4), einen Inline-Dispergiermischer, gefördert und 36%ige Calciumchlorid-Lösung (240 g/L) in einer Menge von 416 ml in den Dosierkopf des Inline-Dispergierers dosiert (5), sofort unter Eintrag von Scherenergie dynamisch eindispergiert, wobei sich ein pH-Wert von etwa 8,5 einstellte und Calciumcarbonat ausgefällt wurde.
Anschließend wurde die Suspension filtriert, gewaschen und ca. 16 h bei 120°C getrocknet. Die erzeugten Kompositpartikel hatten die Zusammensetzung: 25 Masseteile (MT) Pigment, 46 MT Extender, 29 MT gefälltes CaCO₃ und 0,5 MT Additiv.

### Vergleichsbeispiel 1

Wie Beispiel 1 mit dem Unterschied, dass die Suspension nicht durch einen Inline-Dispergierer gefördert wurde, sondern die Calciumchloridlösung in einem zweiten Gefäß mit einem Propellerrührer in die Suspension eingemischt und Calciumcarbonat gefällt wurde. Die erzeugten Kompositpartikel hatten die Zusammensetzung: 25 Masseteile (MT) Pigment, 46 MT Extender, 29 MT gefälltes CaCO₃ und 0,5 MT Additiv.

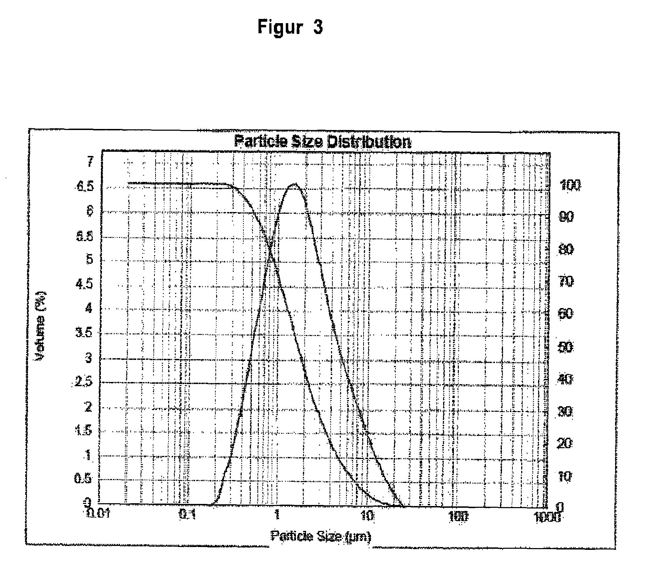

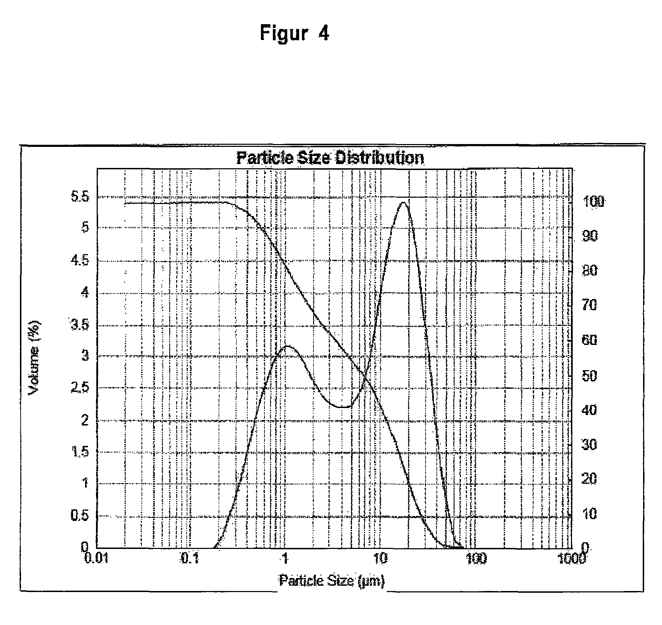

Anschließend wurden die gemäß Beispiel 1 und gemäß Vergleichsbeispiel 1 erzeugten Kompositpartikel hinsichtlich ihrer Partikelgrößenverteilung mittels Laserbeugung mit einem Malvern Mastersizer 2000 untersucht. Die Ergebnisse für die Partikelgrößenverteilung sind in den Figuren 3 und 4 dargestellt.

### Fazit

Die erfindungsgemäß hergestellten Kompositpartikel zeigen im Vergleich zu nach dem Stand der Technik hergestellten Kompositpartikeln eine homogene Verteilung aller Partikel. Das erfindungsgemäße Verfahren ermöglicht eine Steuerung der Größe der gefällten Partikel und der Kompositpartikel.

## Patentansprüche

1. Verfahren zur Herstellung von Kompositpartikeln enthaltend mindestens eine partikelförmige Grundkomponente und in situ gefällte anorganische Partikel aus einer wässrigen Suspension der partikelförmigen Grundkomponente, wobei die Suspension durch einen auf dem Rotor-Stator-Prinzip basierenden Durchflussmischer gefördert wird, **dadurch gekennzeichnet, dass**
mindestens eine gelöste oder dispergierte Vorläuferverbindung und/oder eine pH-steuernde Komponente zur Erzeugung der in situ gefällten anorganischen Partikel in den Durchflussmischer dosiert und die anorganischen Partikel überwiegend im Durchflussmischer gefällt werden.

2. Verfahren nach Anspruch 1 **dadurch gekennzeichnet, dass**
die wässrige Suspension der partikelförmigen Grundkomponente in einem Vorlagegefäß hergestellt wird, das mit einem Hochleistungsrührwerk, welches eine Umfangsgeschwindigkeit von mindestens 15 m/s oder eine spezifische Rührleistung von mindestens 30 W/m³ aufweist, ausgerüstet ist.

3. Verfahren nach Anspruch 1 oder 2 **dadurch gekennzeichnet, dass**
das Verfahren als vollkontinuierliches Verfahren geführt wird.

4. Verfahren nach Anspruch 1 oder 2 **dadurch gekennzeichnet, dass**
das Verfahren im Kreislauf geführt wird.

5. Verfahren nach einem oder mehreren der Ansprüche 1 bis 4 **dadurch gekennzeichnet, dass**
als partikelförmige Grundkomponente Titandioxid eingesetzt wird.

6. Verfahren nach Anspruch 5 **dadurch gekennzeichnet, dass**
als partikelförmige Grundkomponente zusätzlich oder alternativ mindestens ein Füllstoff eingesetzt wird.

7. Verfahren nach Anspruch 6 **dadurch gekennzeichnet, dass**
der Füllstoff ausgewählt ist aus der Gruppe Marmormehl, Kreide, gefälltes Calciumcarbonat, Dolomit, Huntit, Hydromagnesit, Magnesit, Bariumsulfat, Calciumsulfat, natürliche Phosphate, Magnesiumhydroxid,
Aluminiumhydroxid, Aluminiumoxid, Siliciumdioxid in natürlicher, gemahlener, pyrogener oder gefällter technischer Form, Talkum, Zeolithe, Kaolin, Wollastonit, Glimmer, ungebrannte und gebrannte Tonminerale, Perlite, Glasmehl, anorganische und organische Fasern.

8. Verfahren nach einem oder mehreren der Ansprüche 1 bis 7 **dadurch gekennzeichnet, dass**
die in situ gefällten Partikel Calciumcarbonat sind.

9. Verfahren nach Anspruch 8 **dadurch gekennzeichnet, dass**
die Vorläuferverbindungen ausgewählt sind aus der Gruppe Calciumverbindungen wie Calciumchlorid, Calciumnitrat, Calciumhydroxid, und Calciumcarbonat sowie basisches Carbonat wie z.B. Natriumcarbonat.

10. Verfahren nach einem oder mehreren der Ansprüche 1 bis 7 **dadurch gekennzeichnet, dass**
die in situ gefällten Partikel Calciumphosphat, Aluminiumphosphat oder Aluminiumhydroxid sind.

11. Verfahren nach Anspruch 10 **dadurch gekennzeichnet, dass**
zur in situ-Fällung von Calciumphosphat die Vorläuferverbindungen ausgewählt sind aus der Gruppe Calciumcarbonat, Calciumphosphat, Calciumchlorid, Calciumnitrat, gebrannter und gelöschter Kalk sowie Phosphorsäure, Phosphate, Hydrogenphosphat und Polyphosphate.

12. Verfahren nach einem oder mehreren der Ansprüche 1 bis 11 **dadurch gekennzeichnet, dass**
die Temperatur der Suspension auf Werte zwischen 0°C und 100°C eingestellt wird.

13. Verfahren nach einem oder mehreren der Ansprüche 1 bis 12 **dadurch gekennzeichnet, dass**
die Kompositpartikel weiterhin mit anorganischen Verbindungen wie z.B. Phosphat, Siliciumdioxid, Aluminiumoxid, Fluorid oder organischen Verbindungen wie Oxalat beschichtet werden.

14. Verfahren nach einem oder mehreren der Ansprüche 1 bis 13 **dadurch gekennzeichnet, dass**
die Kompositpartikel abschließend mit organischen Additiven behandelt werden.

15. Verwendung der Kompositpartikel nach einem oder mehreren der Ansprüche 1 bis 14 in Beschichtungen, Kunststoffen und Laminaten.
